# EUROPEAN PATENT SPECIFICATION

(11) **EP 2 519 620 B1**
(45) Date of publication and mention of the grant of the patent: **29.04.2020**
(21) Application number: 10841369.1
(22) Date of filing: 28.12.2010
(51) Int. Cl.: C11B 13/02, C11D 13/30, D21C 11/00, D21C 11/12

(54) **A METHOD OF PROCESSING A LIQUOR MIXTURE OF BLACK LIQUOR AND TALL OIL SOAP PRODUCT FROM A SULPHATE METHOD PULP MILL**
VERFAHREN ZUR VERARBEITEN EINES GEMISCHES AUS SCHWARZLAUGE UND TALLÖLSEIFENPRODUKT AUS EINES SULFATVERFAHREN VON EINER ZELLSTOFFMÜHLE
PROCÉDÉ POUR PROCÉSSER DE FRACTIONS CONCENTRÉES DE SAVON À L'HUILE DE PIN À PARTIR D'UN MÉLANGE DE LIQUEUR NOIRE ET DE SAVON À L'HUILE DE PIN PROVENANT D'UNE METHODE DE TRAITEMENT SULPHATÉE DANS UNE USINE DE PÂTE À PAPIER

(30) Priority: 30.12.2009 SE 0901624
(43) Date of publication of application: 07.11.2012
(73) Proprietor: Hofstedt, Anders Göran, 585 97 Linköping (SE)
(72) Inventor: Hofstedt, Anders Göran, 585 97 Linköping (SE)
(74) Representative: Örtenblad, Bertil Tore
(86) International application number: PCT/SE2010/000320
(87) International publication number: WO 2011/081587

(56) References cited:
- WO-A1-2004/074415
- US-A- 2 200 468
- US-A- 2 838 481
- US-A- 4 005 060
- US-A- 4 088 638
- GOBLE A.L.: 'Self-cleaning centrifuge improves CTO separatyion efficiency, yields' PULP&PAPER November 1980, pages 147 - 150, XP008168974
- WANSBROUGH H.: 'Tall oil production and processing', [Online] XP008168972 Retrieved from the Internet: <URL:www.nzic.org.nz/ChemProcesses/forestry /index.html>

## Description

### TECHNICAL FIELD OF THE INVENTION

This invention refers to a method to separating, in an introductory or first processing step, from an available mixture of black liquor and small portions of tall oil soap product, concentrated portions of said tall oil soap product from said black liquor.

Said separated concentrated portions of said tall oil soap product and separated black liquor being adapted, within a subsequent or second processing step, for being the object of treatment or processing, such as within an acidulating and splitting arrangement to split said concentrated tall oil soap product into crude tall oil (CTO) and into residual products, such as acidic water and/or the object of treatment or processing, such as within an evaporation plant and succeeding burning in a recovery boiler.

The crude tall oil within the tall oil soap product is also called CTO, as an abbreviated expression which will also be used in the following and in the accompanying drawings.

CTO is a bi-product from the manufacture of chemical pulp that is obtained from tall oil soap product as a dark odorous liquor before refining, that contains principally resin acid and fatty acid (as oleic acid and linoleic acids) with some sterols and other nonacid components.

The present invention is concentrated to purify the concentrated tall oil soap product and minimize the residual products, such as black liquor fractions, and to produce black liquor with low tall oil soap content.

The present invention is thus concentrated towards:
a. A method for separating concentrated tall oil soap product from black liquor within a first processing step,
b. Said method for treating or processing thus separated tall oil soap product in a subsequent or second processing step to form CTO and residual products, such as acidic water and other components and
c. Said method for treating or processing thus separated black liquor, with only a small portion of tall oil soap product, in a subsequent or second processing step by using an evaporation plant and a subsequent burning of evaporated black liquor within a recovery boiler.

Residual products are usually in the form of precipitated lignin and/or salts in a mixture.

The invention intends thereby to reduce and/or to eliminate the technical problems which are related to the fallout of the tall oil soap product itself and which have turned out otherwise to become of interest in a subsequent acidulating or splitting process for the extraction of CTO from a refined and concentrated tall oil soap product and separate any residual products, where the CTO is directly adapted for a subsequent cleansing or preparation processing step.

This invention has advantages for use in a pulp mill based on the sulphate method wherein the contents of a digester are permitted to pass over to straining equipment or a straining arrangement in which fiber-containing products are separated for use in the basic production of pulp, whereas the "black liquor" formed in the digester is transferred, together with its portions of tall oil soap product to a separating and concentrating procedural step with regard to said tall oil soap product, here designated as an introductory or a first procedural or processing step.

Black liquor does not only contain sodium and calcium in the form of dissolved salts (for example calcium ions) and lignin compounds but also portions of tall oil soap product, wherein the portions of tall oil soap product has been discontinuously separated to a more concentrated, and from black liquor, more purified form.

Such separated, concentrated (thickened) and purified tall oil soap product will, via an acidulating or splitting process in an acidulating system or arrangement, form CTO and residual products, such as acidic water, with deposits of salt (CaSO₄ and Na₂SO₄) and lignin compounds or components.

The present invention makes use of one or more centrifugal separators, for separating in one or more steps portions of tall oil soap product from the black liquor, these centrifugal separators are machines that are able to separate mixed substances of different densities by centrifugal forces.

### BACKGROUND OF THE INVENTION

Methods, arrangements and structures related to the technical field mentioned above and having a function and a structure which fulfill set requirements are known earlier in a plurality of different embodiments.

It is previously known that if separated tall oil soap product, within a first processing step, in a mixture of tall oil soap product and black liquor, is exposing a high content of residual products, such as in the form of black liquor, a further separation is usually needed before the concentrated tall oil soap product are to be subject to acidulating and/or splitting process.

It is previously known that if separated black liquor, within a first processing step, in a mixture of tall oil soap product and black liquor, with a high content of residual products, such as tall oil soap product, causes challenges in an evaporation plant as the evaporated black liquor contains a high portion of tall oil soap product with a too high energy content for a fixed dimensioned recovery boiler.

With this in mind it has been a challenge to cause a separation of tall oil soap product from black liquor in such a degree that the separation result exceeds the results achieved by a gravimetric separation with one or more tanks and with a discontinuous process.

As an example of the background of technology and the technical field to which the present invention relates, a method and an arrangement may be mentioned having portions of tall oil soap product separated from the black liquor by means of a discontinuous gravimetric separating process in one or more tanks, equalizing the flow and utilized in a paper pulp mill.

Such a separating process is based on that the tall oil soap product, being lighter than the black liquor and its content of tall oil soap product is floating upwards towards and being collectable at the upper portion of a tank, whereas the black liquor sinks downwards and is collectable at the bottom portion of the tank.

The previously known technology indicates skimming off and separating said tall oil soap product from available black liquor and concentrating the tall oil soap product gravimetrically in a number of procedural steps and thereafter acidulating the tall oil soap product into CTO and acidic water, with its salt and lignin deposits.

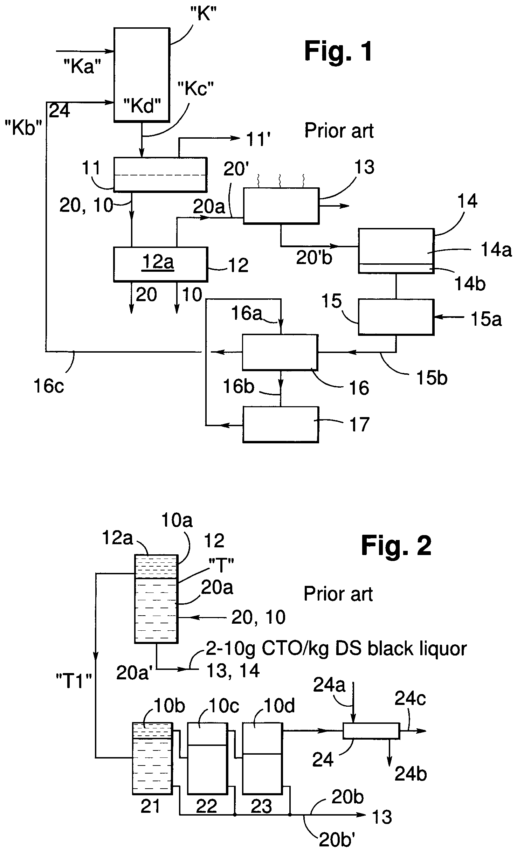

In the publication HUIBERS, D.T.A. "Tall Oil" (Kirk-Othmer Encyclopedia of Chemical Technology. John Wiley & Sons, 2000) is a method and an arrangement shown and described which can be considered completely to concur with known arrangements, such as the one illustrated in Figures 1 and 2, respectively in the following and attached drawings.

US 4088638 A1 as well as US 2200468 A1 described methods for separating tall oil soap from black liquor by using air to form a soap foam, which is then treated using a centrifugal separator.

In consideration of the characteristics related to the present invention with regard to utilizing centrifugal separators, the contents of patent publication US-2,227,203-A should be mentioned as the standpoint of earlier technology.

With regard to the contents of this patent publication a process is shown and described there, for the extraction of tall oil soap product from black liquor, in different processing stages or steps, which initially is to have been stored for a gravimetric separation in a tank (10).

The process indicates the utilizing of a plural-stage evaporation process in an evaporator plant (11) to a dry substance (DS) of approximately 40 %.

The black liquor, thickened in this manner with its tall oil soap product and components, is supplied to a first centrifugal separator (12), which has the first run-off products in the form of black liquor sent to an evaporation stage or plant (24), with DS of 70 %, supplied to a recovery boiler in a known manner.

More specifically it should be noted that other separated products in the form of the tall oil soap product mixed with black liquor, lignin and other residual products, are supplied to a (second) tank (13) for saponification, but through a time-consuming and energy-consuming specific washing and treatment process.

For this purpose the treatment process indicates that hot (heated) water (15) is supplied to a tank (13) for diluting and-dissolving the black liquor and its tall oil soap product over thermal processes, so as thereafter to supply to this diluted and heated solution an alkaline solution (heated solution) for additionally diluting the solution in the tank (13) with the purpose of depositing dissolved saponificated components and/or components that may be saponificated.

This tall oil soap product diluted in two different sequences separated in time is now to become the subject of an additional centrifugal separation, in a (second) centrifugal separator (16).

The tall oil soap product at that time diluted and separated, is then supplied to a new tank (17) with the same treatment process in two different sequences as in the earlier tank (13), a new centrifugal separation is carried out in another centrifugal separator (20), an additional new tank (21) and a terminating centrifugal separator (23), with the purpose of depositing the dissolved saponificated and/or saponificatable components so as to separate cleansed tall oil soap product from the cleansing liquid (the solution of Na₂SO₄).

In this manner, not only supplying hot water (15) to dilute the tall oil soap product and other residual products in three different tanks (13, 17, 21) and additionally at each tank supplying an alkaline solution (14) for additional dilution and adaptation of the "pH"-value of the solution and thereafter separating the black liquor from tall oil soap product in four different centrifugal separators (12, 16, 20, and 23, respectively) requires a relatively high supply of energy with the present day requirement of effectiveness of energy, and also does not provide the characteristics related to the present invention.

Furthermore, this arrangement requires measures for handling the substantial quantity of washing liquid that is necessary in the various processing stages or steps. In this regard an evaporation plant should be appropriate.

### STATEMENT OF THE PRESENT INVENTION TECHNICAL PROBLEM

Considering the circumstance that the technical contemplations that a person skilled in the relevant technical art must carry out in order to offer a solution to one or more given technical problems are on the one hand a necessary insight into the measures and/or the sequence of measures which are to be carried out and on the other hand a necessary choice of the one or more means that are necessary, on the basis of this, the following technical problems should be relevant in producing the present object of invention.

The invention is defined by the appended claims.

Considering the earlier standpoint of technology, as it is described above and illustrated in the accompanying Figures 1 and 2, based on a method and an arrangement, with a discontinuous withdrawal of tall oil soap portions floating on top of and above a heavier black liquor from a gravimetrically operating separating tank, as an upper thickened layer, as well as additional separation of the tall oil soap product taken out as a thickened layer in subsequent tanks for measuring a discontinuously procured, more thickened and cleansed tall oil soap product is transferred to an acidulating process for producing CTO and residual products by adding an acid, it should thus be seen as a technical problem to be able to understand the significance of, the advantages related to and/or the technical measures and considerations which will be needed for offering a new process and a method with subsequent processing steps, whereby:
a. a continuous withdrawal of concentrated portions of tall oil soap product from black liquor to form a concentrated and sufficiently cleansed tall oil soap product adaptable for producing CTO and/or,
b. producing a cleansed tall oil soap product with a small or insignificant lowering of temperature without necessarily requiring to supply external heat energy and/or,
c. a short period of time between the relevant withdrawal of concentrated tall oil soap product and the production of CTO and/or,
d. utilizing an initial, or first, separating step to separate portions of tall oil soap product and to concentrate portions of tall oil soap product from black liquor and a directly (or over a buffer tank) thereto connected acidulating or splitting arrangement and/or
e. improved quality to a separated tall oil soap product and/or,
f. an increasing throughput velocity of black liquor and tall oil soap product and/or,
g. a small portion of black liquor mixed into the concentrated tall oil soap product so as to thereby create a requirement of a smaller portion of acid (euphoric acid) within the acidulating or splitting arrangement and/or,
h. separating off available black liquor drained off over screen equipment with included portions of tall oil soap product and concentrating the portions of tall oil soap product to form CTO in a second processing stage, as well as in a directly, or over a buffer tank, following processing step acidulating such extracted and fully concentrated tall oil soap product into CTO and residual products, while reducing otherwise normally appearing energy losses and/or adjusting the tall oil soap product within the black liquor separated so it does not jeopardize the function of the evaporation plant and causes a low energy supply to the recovery boiler, with an increased function time and/or
I. increasing the production within the paper mill if the capacity of the mill is limited due to the actual capacity of the recovery boiler fed by evaporated black liquor with high tall oil soap product from discontinuously operated gravimetric tanks.

There is a technical problem in being able to understand the significance of, the advantages related to and/or the technical measures and considerations which will be required for creating an initial, or first, processing step, which with a small reduction of temperature can separate and concentrate portions of tall oil soap product from black liquor in order to enable the black liquor with small tall oil soap product to be supplied directly to an evaporation plant.

There is a technical problem in being able to understand the significance of, the advantages related to and/or the technical measures and considerations which will be required for creating conditions where, in a method a mixture of black liquor and its small portions of tall oil soap product, during a continuous processing step, may be subject to said separation within a tank and/or within a centrifugal separator, whereby said separated small portions of tall oil soap product is, in a concentrated form and with small fractions of black liquor, adaptable to a treatment or processing in a subsequent or second processing step, such as formed as said acidulation and/or splitter arrangement, while said black liquor, and its adapted small fraction of tall oil soap product, is subject to be fed to said evaporation plant and thereafter fed to said recovery boiler.

There is a technical problem in being able to understand the significance of, the advantages related to and/or the technical measures and considerations which will be required for creating conditions where separated concentrated tall oil soap product within said tank may directly be fed to a centrifugal separator, for separating tall oil soap product from residual black liquor.

There is a technical problem in being able to understand the significance of, the advantages related to and/or the technical measures and considerations which will be required for creating conditions where said separated black liquor within said tank and said separated black liquor within said centrifugal separator are to be fed to said evaporation plant.

There is a technical problem in being able to understand the significance of, the advantages related to and/or the technical measures and considerations which will be required for creating conditions where said black liquor and its small portions of tall oil soap product is, during a continuous processing step, subject to separation within a second centrifugal separator and/or tank, said separated tall oil soap product are treated or processed in an acidulating and/or splitting arrangement to form CTO and acidic water separated in a centrifugal separator.

There is a technical problem in being able to understand the significance of, the advantages related to and/or the technical measures and considerations which will be required for permitting, within the initial or first processing step over a centrifugal separator, the separated and concentrated tall oil soap product to exhibit improved characteristics and qualities, as compared to the ones that concern earlier known gravimetric separating processes.

There is a technical problem in being able to understand the significance of, the advantages related to and/or the technical measures and considerations which will be required for utilizing as said initial, first, and subsequent (second, third, etc.) processing step one or more, such as two, centrifugal separators or tanks positioned in series or in parallel.

There is a technical problem in being able to understand the significance of, the advantages related to and/or the technical measures and considerations which will be required for utilizing as said initial, first, processing step a first centrifugal separator having a high flow capacity and/or separating capacity and adapting, as said following or subsequent second centrifugal separator, a second utilized centrifugal separator to a considerably lower or low flow capacity and/or separating velocity or capacity.

There is a technical problem in being able to understand the significance of, the advantages related to and/or the technical measures and considerations which will be required for creating a procedure based on a few such as solely two processing steps and a compact arrangement adapted for performing the method and which in its processing steps, via individual centrifugal separators, can successively reduce (and eliminate) the existence of salts (for example calcium sulphate (lime)) and lignin products in produced concentrated tall oil soap product in the first processing step and in used concentrated tall oil soap product in the acidulating arrangement.

There is a technical problem in being able to understand the significance of, the advantages related to and/or the technical measures and considerations which will be required for reducing (or eliminating) the technical problems which in known technology usually exist in the acidulating process activated in the acidulating or splitting arrangement in consequence of salts (for example calcium sulphate) deposited therein.

There is a technical problem in being able to understand the significance of, the advantages related to and/or the technical measures and considerations which will be required for creating a method with a few such as two specific continuously active and mutually coordinated and dimensioned processing steps, one for concentrating portions of tall oil soap product and removing portions of black liquor and one for an acidulating process for acidulating the concentrated tall oil soap product by the use of an added acid in the acidulating or splitting arrangement.

There is a technical problem in being able to understand the significance of, the advantages related to and/or the technical measures and considerations which will be required for having the procedure comprise a few such as only two centrifugal separators connected in series and/or parallel with each other but usually with a buffer tank disposed there between.

There is a technical problem in being able to understand the significance of, the advantages related to and/or the technical measures and considerations which will be required for having residual products, extracted from an initial processing step comprising a centrifugal separator, to be supplied directly to an evaporating plant.

There is a technical problem in being able to understand the significance of, the advantages related to and/or the technical measures and considerations which will be required for improving and increasing the separation and concentration capacities of tall oil soap product and adapted acidulating products in an existing acidulating or splitting arrangement.

There is a technical problem in being able to understand the significance of, the advantages related to and/or the technical measures and considerations which will be required for having the portions of tall oil soap product to be separated and concentrated, in warm condition, from the black liquor and for separating in warm condition concentrated tall oil soap product with a small amount of a so-called intermediate phase and salt deposition as compared to a tall oil soap product separated and concentrated gravimetrically in separating tanks.

There is a technical problem in being able to understand the significance of, the advantages related to and/or the technical measures and considerations which will be required in order to understand that a centrifugal separator, separation and concentration of tall oil soap product from black liquor, will become more reliable and effective as compared to a gravimetrical separation in one or more separating tanks, which will result in that a larger quantity and quality of tall oil soap product can be achieved and that a larger quantity of separated black liquor can be achieved but also, and not least, that the evaporation of black liquor, separated from said tall oil soap product does not have to be carried out with too much tall oil soap product in the black liquor, which would result in an altogether too high contribution of energy with problems, such as foam in the evaporation plant as well as the presence of tall oil soap product in the black liquor, along with pulp fibers, accelerates fouling of the evaporator.

There is a technical problem in being able to understand the significance of, the advantages related to and/or the technical measures and considerations which will be required for limiting the addition of the tall oil soap product and/or the concentration of tall oil soap product to a recovery boiler together with the black liquor without decreasing the combustion speed, which would be necessary if the black liquor separated from the tall oil soap product is too rich in energy with accompanying portions of tall oil soap product.

There is a technical problem in being able to understand the significance of, the advantages related to and/or the technical measures and considerations which will be required for understanding that separator separated portions of tall oil soap product from black liquor offer higher quality to the concentrated tall oil soap product than has been possible earlier.

There is a technical problem in being able to understand the significance of, the advantages related to and/or the technical measures and considerations which will be required for letting the concentrated tall oil soap product achieved in this manner be transferred in a warm state, via its first centrifugal separator included in the initial or first processing step directly, or by means of a buffer tank, to the following second processing step, in which the achieved concentrated tall oil soap is mixed with an acid, in warm condition, for being supplied to a succeeding, second, centrifugal separator for separating treated and concentrated tall oil soap product to CTO and residual products, such as in the form of acidic water.

There is a technical problem in being able to understand the significance of, the advantages related to and/or the technical measures and considerations which will be required for letting the tall oil soap product, thus separated and concentrated and transferred to the acidulating arrangement, be chosen to have a high temperature, such as a temperature of above 95°C or thereabouts.

There is a technical problem in being able to understand the significance of, the advantages related to and/or the technical measures and considerations which will be required for letting acid in heated condition be chosen to have a high temperature, such as a temperature of higher than 90°C, such as 95°C or thereabouts.

There is a technical problem in being able to understand the significance of, the advantages related to and/or the technical measures and considerations which will be required for letting the first centrifugal separator, included in the introductory or first processing step, be chosen with a high separating capacity for tall oil soap product but with small portions of residual products included, with the consistency or reological condition adapted towards porridge or mousse structure, and black liquor with high portions of residual products and that the chosen velocity or capacity within the subsequent processing step including a second centrifugal separator can be chosen to have a lower speed or capacity of separation for treating a finally concentrated tall oil soap product and reduced residual products.

There is a technical problem in being able to understand the significance of, the advantages related to and/or the technical measures and considerations which will be required for permitting the tall oil soap product, formed and concentrated in the first centrifugal separator, to be chosen with a high concentration and with very small portions of residual products, such as in the form of black liquor, wherein the concentration of tall oil soap product is to be greater than 80 percent by volume or thereabouts.

There is a technical problem in being able to understand the significance of, the advantages related to and/or the technical measures and considerations which will be required for introducing a separating buffer tank between the used processing steps, but however, the formed and concentrated portions of tall oil soap product should be transferred directly to an acidulating plant for production of CTO, if possible within a chosen short period of time.

There is a technical problem in being able to understand the significance of, the advantages related to and/or the technical measures and considerations which will be required for choosing and adapting the duration of time so that the portions of concentration of separated tall oil soap product from the black liquor and acidulated into CTO in the acidulating or splitting arrangement exhibit a smaller portion of an intermediate phase and/or salt deposits than the case of a concentrated tall oil soap product achieved by a gravimetric separation of portions of tall oil soap product from black liquor with the help of separated containers or tanks.

### THE SOLUTION

As its starting point the present invention takes the known technology mentioned by way of introduction in a method or alternatively in arrangements for separating and concentrating portions of tall oil soap product from black liquor in an introductory or first processing step from an available mixture of black liquor and portions of tall oil soap product, with the concentration of tall oil soap product being adaptable for treatment or processing within a subsequent processing step, such as the addition of an acid becoming the object of acidulating into CTO products and residual products, such as for example acidic water and for an evaporation plant and/or a recovery boiler.

In order to solve one or more of the technical problems mentioned above the present invention more specifically indicates that the known technology is to be supplemented by the utilization of at least a few processing steps in sequence.

In addition the characteristics disclosed by the sub claims are indicated as proposed embodiments falling within the framework of the basic concept of the present invention.

### ADVANTAGES

The advantages which primarily must be considered to be characterizing of the present invention and the specific significant characteristics indicated thereby are that prerequisites have been created hereby for separating, from an available mixture of black liquor and portions of tall oil soap product in a liquidized flow, in an introductory or first processing step a concentrating portion of said tall oil soap product from black liquor is to be treatable or processable in a subsequent processing step letting thus separated and concentrated tall oil soap product, by way of a suggestion to a concentration of more than 80 present by volume, be the subject of acidulating to CTO products and residual products, such as i.e. acidic water in a acidulating or splitting arrangement and for an evaporation plant and/or a recovery boiler.

The centrifugal separator of the introductory or first processing step may feed directly and continually with a drained black liquor with its portions of tall oil soap product, and from the drained black liquor the portions of tall oil soap product are separated and concentrated and being supplied, in a consistency of porridge or mousse structure, to the acidulating or splitting arrangement directly or over a buffer tank and for an evaporation plant and/or a recovery boiler.

### SHORT DESCRIPTION OF THE DRAWINGS

The basic prerequisites occurring in a pulp mill based on the sulphate method and a previously known discontinuous procedure or process with an associated arrangement for separating and concentrating portions of tall oil soap product or portions obtained from and included in black liquor, produced in a digester, said portions of said tall oil soap product included in the black liquor and/or for gravimetric separation in tanks of concentrated and cleansed portions of tall oil soap product into clean tall oil soap product and presently proposed embodiments of a continuous procedure or process, exhibiting the significant characteristics related to the present invention, will now be described more closely in an exemplifying purpose with reference to the enclosed drawings, wherein;
Figure 1 schematically shows specific portions or sections of a prior art pulp mill, which is active according to the sulphate method, wherein a flow of liquor in the form of a black liquor with associated and mixed portions of tall oil soap product are separated in a sieve arrangement as a used boiling liquid from cellulose fibers,
Figure 2 shows schematically a known discontinuous time-consuming method for producing, by means of a gravimetric separation within a number of tanks, more and more concentrated and from black liquor more and more cleansed portions of tall oil soap product, which here, as a final product, are designated as a concentrated CTO product,

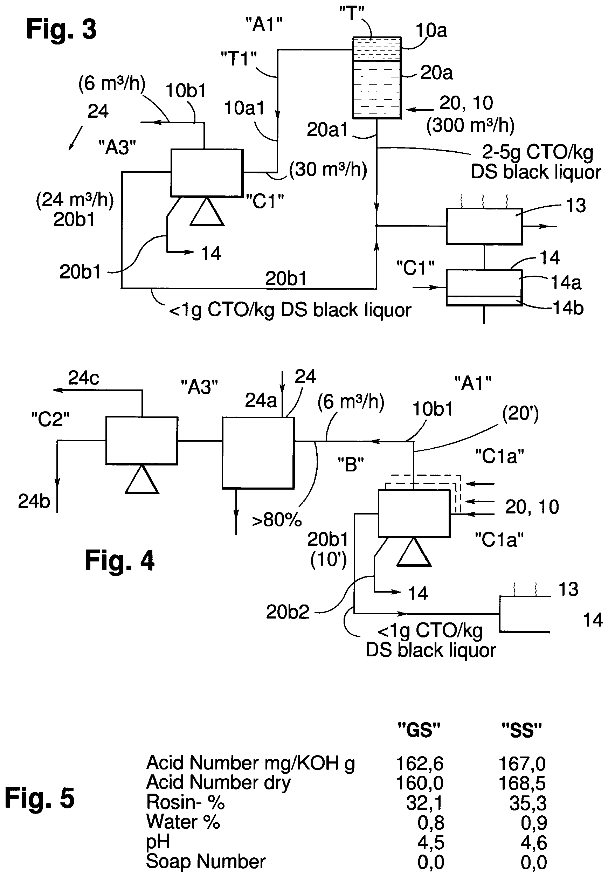

Figure 3 illustrates a solution not according to the invention, in which the existence of a tank adapted for gravimetric separation of portions of tall oil soap product from black liquor and a centrifugal separator connected after a tank, directly or over a not shown buffer tank, for a continuously acting introductory or first processing step for feeding a continuously acting second processing step with a centrifugal separator,
Figure 4 basically illustrates an embodiment of the present invention wherein a single first centrifugal separator (or a number of parallel oriented separators) is utilized as an introductory first processing step whereas a single separation equipment here shown as a second centrifugal separator (or a number of serial and/or parallel oriented separation equipment such as separators) is utilized as a subsequent or second processing step, in the form of an acidulating or splitting arrangement, and
Figure 5 shows a table concerning gravimetric separation of black liquor and tall oil soap product, designated "GS", and a separation "SS" according to Figures 3 or 4, respectively.

### DESCRIPTION OF A PORTION OF A PULP MILL ACCORDING TO THE SULPHATE METHOD

Figure 1 shows utilizing a digester "K", which is supplied with wood chips "Ka" and white liquor "Kb" in a known manner.

The portions "Kc" of chips, boiled in lye "Kd" and boiling liquid, are after a completed process supplied to a screening equipment or a screening arrangement 11 , in which boiled cellulose fibers 11' are run off, and light lye or weak lye, in the form of so-called black liquor 20, passes through the screening equipment 11 together with a smaller amount of portions 10 of tall oil soap product, with the cellulose fibers 11' being transported further in known manner for manufacturing pulp.

The black liquor 20 and its content of the portions 10 of tall oil soap product (20, 10) may, as an initial mixture, be processed in a plurality of processing steps 12 i.e. enabling the extraction of portions 10 of tall oil soap product from black liquor 20, which will be described more specifically as a known procedure and an arrangement for this with reference to Figures 2-5, respectively.

In the processing step 12 in Figures 1 and 2 the mixture (20, 10) of black liquor 20 and portions of tall oil soap product 10 are separated by a gravimetric separation in a tank 12a, in which a portion 20a of concentrated black liquor 20' is supplied to an evaporation plant 13, wherein water evaporates and the portion 20a of black liquor 20' is concentrated from processing step 12 to a concentration 20'b of black liquor 20.

This concentrated black liquor 20'b is supplied to a recovery boiler 14, in which organic wood pieces 14a are burned, whereas inorganic compounds are collected as a lower charge 4b.

The inorganic matter 14b is mixed with water 15a in a mixer 15 for forming so-called green liquor 15b.

The green liquor 15b is mixed in a mixer 16 with caustic lime 16a, which results in calcium carbonate 16b (slime), which is supplied to a lime kiln 17. In mixer 6 the green liquor 15b is converted to white liquor "Kb", for use in the digester "K" via a line or pipe 16c.

### DESCRIPTION OF A KNOWN ARRANGEMENT FOR SEPARATING AND CONCENTRATING TALL OIL SOAP PRODUCT PORTIONS FROM BLACK LIQUOR, ACCORDING TO FIGURE 2.

Figure 2 now illustrates an arrangement or processing step 12 in which a mixture of black liquor 20 and portions (20,10) of tall oil soap product or portions 10 are supplied to a separating or equalizing tank "T" (12a) for causing through a gravimetric separation a portion of thickened tall oil soap product 10a to part or separate from the portion 20a of black liquor 20, which in its turn sinks downward and is led via a line or pipe 20a' to the evaporation plant 13 and the recovery boiler 14.

A first separation step occurs in container or tank "T" and the portion 10a of the tall oil soap product 10 is removed discontinually from the upper part of the tank "T" through a line or pipe "T.

The portion 10a in the tank "T" is thus concentrated and is removed additionally from underlying portions 20a of black liquor 20 in the three illustrated tanks 21, 22, and 23, which are connected in series and which all are intended for creating a successive thickening of the tall oil soap product 10a to 10d towards the upper portions of the tanks for a floatation of tall oil soap product portions.

Here Figure 2 illustrates three such thickening tanks 21, 22, 23, in which additional separation steps are carried out for removing further thickened tall oil soap product 10d with small portions of residual products such as black liquor provided with the reference numeral 20b and being supplied to an evaporation plant 13.

The tall oil soap product 10d is supplied to a acidulating or splitting arrangement 24, in which the concentrated tall oil soap product portions 10d is mixed in a mixer with an acid 24a, such as sulphuric acid, for acidulating the tall oil soap product 10d into CTO 24c and acidic water 24b, however also containing deposits of salt and lignin products as residual products.

Residual products, related to black liquor 20, are removed by means of drainage pipes 20b' in the tanks 21, 22, and 23, respectively.

The procedure which is described here is discontinuous with a repetition time of approximately one to two times per week with regard to separating the tall oil soap product portions 10a from the black liquor 20a in the container or tank "T".

### DECRIPTION OF THE PRESENTLY PROPOSED EMBODIMENTS

By way of introduction it is to be mentioned that in the following description of a presently proposed embodiment which exhibits the significant characteristics related to the invention and which is clarified by the figures shown in the following drawings we have chosen terms and a specific terminology with the purpose of thereby primarily clarifying the inventive concept.

However, in this connection it should be noted that the terms chosen here are not be considered as being limited solely to the terms utilized and chosen here and that it should be understood that each in this manner chosen term is to be interpreted such that in addition it covers all technical equivalents which operate in the same or substantially the same manner so as to thereby be able to achieve the same or essentially the same purpose and/or technical result.

Figure 3 shows a portion of an embodiment not according to the present invention having a continuous separation tank "T" adapted for gravimetrical separation and a centrifugal separator "C1", as a first processing step "A1" for separating and concentrating therein the portions 10a of a tall oil soap 10 to a concentrated tall oil soap product 10a1 (10b1 in Figure 4) and for acidulating in a subsequent processing step "A3" the concentrated tall oil soap product 10b1 in a acidulating or splitting arrangement 24 into CTO 24c and leave the residual products 24b (see Figure 4).

It is to be noted that the concentration of tall oil soap product 10 is low and mixed within the black liquor 20 and that the centrifugal separator "C1" is adapted to concentrate the tall oil soap product 10a1 to a tall oil soap product stream 10b1.

It is to be noted that the concentration of black liquor 20 from the digester "K" is high and that the centrifugal separator "C1" is adapted to separate this black liquor alone to a cleansed stream 20b1.

Said mixture of black liquor 20 and its small portions of tall oil soap 10 is, during a continuous processing step, subject to said separation within said tank "T" and/or within a centrifugal separator "C1", whereby said separated small portions of tall oil soap product 10b1 is, in a concentrated form and with small fractions of black liquor, subject to a treatment or processing in a subsequent or second processing step "A3", formed as said acidulation and/or splitter arrangement 24, while said black liquor 20b1 , and its small fraction of tall oil soap product (10'), is subject to said evaporation plant 13 and thereafter fed to said recovery boiler 14.

Separated concentrated soap product 10a within said tank "T" is directly fed to said centrifugal separator "C1", for separating tall oil soap product 10b1 from residual black liquor 20b1 and said separated black liquor 20a1 within said tank "T" and said separated black liquor 20b1 within said centrifugal separator "C1 " are fed to said evaporation plant 13.

Said black liquor and its small portions of tall oil soap product is during a continuous processing step subject to separation within a second centrifugal separator and/or tank, said separated tall oil soap product are treated or processed in an acidulating and/or splitting arrangement 24 to form CTO 24c and acidic water 24b separated in separation equipment such as a centrifugal separator "C2".

The fundamental structure of a process, a method and an arrangement for separating and concentrating portions 10a1 in Figure 3 and 10b1 in Figure 4 of tall oil soap product from black liquor 20b1 in a first processing step "A1" from an available mixture of black liquor and portions (20, 0) of tall oil soap 10 and acidulating the concentrated tall oil soap product 10b1 in a subsequent second process step "A3" is shown in Figure 4.

As the mentioned first processing step "A1", a single or parallel oriented centrifugal separator "C1a", according to Figure 4, is utilized having high flow capacity and/or separating speed and/or concentration ability, alternatively a tank "T" adapted for gravimetric separation, and a thereafter connected centrifugal separator "C1" according to Figure 3 having a low flow capacity and/or separation speed or capacity and/or concentration capability.

Figure 4 illustrates a method according to the invention for separating from an available liquor mixture of black liquor 20 and small portions (20, 10) of tall oil soap 10 in an introductory or first processing step "A1" separating and concentrating the portions 10b1 of tall oil soap 10 from black liquor 20, with concentrated portions 10b1 , of tall oil soap product being adapted for becoming, in a subsequent process step "A3", the object of acidulating to CTO products 24c and residual products 24b, such as acidic water.

The small tall oil soap 10 portions received in this manner is transferred over a first centrifugal separator "C1a", included in the introductory processing step "A1", in heated condition directly to, or via a not illustrated buffer tank "B", the subsequent process step "A3", wherein the produced concentrated tall oil soap product 10b1 is mixed with an acid 24a, in a heated stage, for being supplied to separation equipment such as a second centrifugal separator "C2" for separating CTO products 24c from residual products 24b, such as in the form of acidic water, precipitated lignin and salts.

The concentrated tall oil soap product 10b1 transferred in this manner is chosen to have a temperature higher than or at least around approximately 95°C, whereas the acid 24a in warm condition is chosen to a temperature of above or at least around approximately 95°C. Lower values could be accepted than the mentioned values, but higher values are preferred. Figures 3 and 4 have been completed with values representing volumes per hour, concentration values etc. as suggested values.

Figure 4 illustrates that the first centrifugal separator "C1a" included in the introductory processing step "A1" is chosen with a high separation capacity for forming a concentrated tall oil soap product 10b1 with small portions of residual products (20') mixed there into, having a porridge or mousse consistency, and separated black liquor 20bl having an adapted small residual portion of tall oil soap (10') and with separation equipment such as a second centrifugal separator "C2", included in the subsequent processing step "A3", is chosen with a lower separation capacity for forming CTO products 24c and residual products 24b. In both separation positions the separator "C1a" can consist of several parallel installed separators if the separation capacity requires a capacity larger than one separator can handle.

The invention proposes that the concentrated tall oil soap product 10b1 is formed in the first centrifugal separator "C1a" and should have a concentration of greater than 80 percent by volume.

Furthermore, in accordance with the invention, it is indicated that the produced concentrated tall oil soap product 10b1 thus formed is to be transferred to separation equipment such as a second centrifugal separator "C2" within a chosen short period of time, preferably shorter than 10 hours, for decreasing or reducing energy losses and for retaining the quality of the tall oil soap product contained therein.

More particularly it is indicated that the period of time be chosen and adapted such, that the tall oil soap product 10b1 separated from the black liquor and concentrated will after treatment in the acidulating arrangement 24 as in separation equipment such as a centrifugal separator "C2" exhibit a smaller portion of an intermediate phase and/or salt deposits than what applies to a tall oil soap product produced by separating said tall oil soap product from black liquor in a gravimetric tank "T", in accordance with Figures 1 and 2, respectively.

Figure 5 illustrates in a table the values "GS" pertaining to an arrangement according to Figures 1 and 2, respectively, and the values "SS" pertaining to a tall oil soap product 10b1 produced according to Figure 3 or Figure 4, respectively.

It is to be noted that the centrifugal separators "C1" and "C1a" may have a design where not only concentrated tall oil soap product 10b1 but also black liquor 20b1 is separated.

Furthermore the centrifugal separators "C1" and "C1a" have an additional exit 20b2 intended to separate suspended material having a density exceeding the density of black liquor. This suspended material is directly fed to the recovery boiler 14.

The invention is of course not restricted to the embodiment disclosed above as an example and it can be subjected to modifications within the frame of the inventive concept defined in the following claims.

## Claims

1. A method for processing a liquor mixture, from a sulphate method pulp mill, of black liquor (20) and small portions (10) of tall oil soap products,
the method comprising, in a first continuous processing step ("A1"), separating and concentrating portions (10b1) of said tall oil soap (10) from said black liquor (20), said concentrated portions (10b1) of tall oil soap product being adapted for then becoming, in a subsequent process step ("A3"), the object of acidulating to crude tall oil (CTO) products (24c) and residual products (24b),
the method further comprising transferring, over a first centrifugal separator ("C1a") included in the first processing step ("A1") and in heated condition, the small tall oil soap (10) portions received in this manner, in heated condition directly, or via a buffer tank ("B"), to said subsequent process step ("A3"), wherein the produced concentrated tall oil soap product (10b1) is mixed with an acid (24a), in a heated stage, for being supplied to a second centrifugal separator ("C2"), included in the subsequent processing step ("A3"), for separating said crude tall oil products (24c) from said residual products (24b),
wherein the concentrated tall oil soap product (10b1) transferred in this manner is chosen to have a temperature higher than or at least around approximately 95°C, whereas the acid (24a) in warm condition is chosen to a temperature of above or at least around approximately 95°C,
wherein the first centrifugal separator ("C1a") is chosen with a high separation capacity for forming said concentrated tall oil soap product (10b1) with small portions of residual products mixed with said concentrated tall oil soap product (10b1), and separated black liquor (20bl) having an adapted small residual portion of tall oil soap,
wherein the second centrifugal separator ("C2") is chosen with a lower separation capacity for forming said crude tall oil products (24c) and said residual products (24b),
wherein the concentrated tall oil soap product (10b1) is formed in the first centrifugal separator ("C1a") and has a concentration of greater than 80 percent by volume, and
wherein the centrifugal separator ("C1a") has an additional exit (20b2) for separating suspended material having a density exceeding the density of black liquor, which suspended material is directly fed to a recovery boiler (14).

2. A method as claimed in claim 1, wherein said first processing step ("A1") is directly connected to the second processing step ("A3").

3. A method as claimed in claim 1 or 2, wherein said residual products (24b) are in the form of acidic water, precipitated lignin and salts.

4. A method as claimed in any one of the preceding claims, wherein the first centrifugal separator ("C1a") consists of several parallel installed separators.

5. A method as claimed in any one of the preceding claims, wherein the produced concentrated tall oil soap product (10b1) is transferred to the second centrifugal separator ("C2") within a period of time which is shorter than 10 hours.

## Patentansprüche

1. Ein Verfahren zur Verarbeitung einer Laugenmischung aus Schwarzlauge (20) und kleinen Portionen (10) von Tallöl-Seifenprodukten von einer nach dem Sulfatverfahren arbeitenden Zellstofffabrik,
wobei das Verfahren in einem ersten kontinuierlichen Verarbeitungsschritt ("A1") das Abtrennen und Konzentrieren von Teilen (10b1) der Tallöl-Seife (10) von der Schwarzlauge (20) umfasst, wobei die konzentrierten Teile (10b1) des Tallöl-Seifenprodukts so angepasst sind, dass sie dann in einem nachfolgenden Verfahrensschritt ("A3") zum Gegenstand einer Ansäuerung zu rohen Tallöl-Produkten (24c) und Rückstands-Produkten (24b) werden,
wobei das Verfahren ferner das Überführen, über einen ersten Zentrifugalabscheider ("C1a"), der in dem ersten Verarbeitungsschritt ("A1") enthalten und in geheiztem Zustand ist, die erhaltenen kleinen Portionen (10) von Tallöl-Seifen, die auf diese Weise erhalten wurden, im geheizten Zustand direkt oder über einen Puffertank ("B") zu besagtem nachfolgenden Verfahrensschritt ("A3"), umfasst, wobei das erzeugte konzentrierte Tallöl-Seifenprodukt (10b1) in einer erhitzten Stufe mit einer Säure (24a) gemischt wird, um einem zweiten Zentrifugalabscheider ("C2") zugeführt zu werden, der in dem nachfolgenden Verarbeitungsschritt ("A3") enthalten ist, um die rohen Tallöl-Produkte (24c) von den Rückstands-Produkten (24b) zu trennen,
wobei das auf diese Weise übertragene konzentrierte Tallöl-Seifenprodukt (10b1) so gewählt wird, dass es eine Temperatur von mehr als oder mindestens etwa 95°C hat, während die Säure (24a) im warmen Zustand auf eine Temperatur von mehr als oder mindestens etwa 95°C eingestellt wird,
wobei der erste Zentrifugalabscheider ("C1a") mit einer hohen Abscheidekapazität zur Bildung des konzentrierten Tallöl-Seifenproduktes (10b1) mit kleinen Anteilen an Rückstands-Produkten, die mit dem konzentrierten Tallöl-Seifenprodukt (10b1) vermischt sind, und abgetrennter Schwarzlauge (20b1) mit einem angepassten kleinen Rückstandsanteil an Tallöl-Seife gewählt wird,
wobei der zweite Zentrifugalseparator ("C2") mit einer geringeren Separationskapazität zur Bildung der rohen Tallöl-Produkte (24c) und der Rückstands-Produkte (24b) gewählt wird, wobei das konzentrierte Tallöl-Seifenprodukt (10b1) im ersten Zentrifugalabscheider ("C1a") gebildet wird und eine Konzentration von mehr als 80 Volumenprozent aufweist, und
wobei der Zentrifugalabscheider ("C1a") einen zusätzlichen Ausgang (20b2) zum Abscheiden von suspendiertem Material mit einer Dichte, welche die Dichte von Schwarzlauge übersteigt, aufweist, wobei das suspendierte Material direkt einem Rückgewinnungskessel (14) zugeführt wird.

2. Ein Verfahren nach Anspruch 1, wobei der erste Verarbeitungsschritt ("A1") direkt mit dem zweiten Verarbeitungsschritt ("A3") verbunden ist.

3. Ein Verfahren nach Anspruch 1 oder 2, wobei die Rückstands-Produkte (24b) in Form von saurem Wasser, gefälltem Lignin und Salzen vorliegen.

4. Ein Verfahren nach einem der vorstehenden Ansprüche, wobei der erste Zentrifugalabscheider ("C1a") aus mehreren parallel installierten Abscheidern besteht.

5. Ein Verfahren nach einem der vorstehenden Ansprüche, wobei das erzeugte konzentrierte Tallöl-Seifenprodukt (10b1) innerhalb einer Zeitspanne, die kürzer als 10 Stunden ist, in den zweiten Zentrifugalabscheider ("C2") überführt wird.

## Revendications

1. Procédé de transformation d'un mélange de liqueur, provenant d'une usine de pâte à papier utilisant un procédé sulfaté, constitué d'une liqueur noire (20) et de faibles fractions (10) de produits de savons à l'huile de pin,
le procédé comprenant, lors d'une première étape de transformation continue (« A1 »), la séparation et la concentration des fractions (10b1 dudit savon à l'huile de pin (10) à partir de ladite liqueur noire (20), lesdites fractions concentrées (10b1) du produit de savon à l'huile de pin étant adaptées pour ensuite faire, lors d'une étape de transformation ultérieure (« A3 »), l'objet d'une acidification en produits d'huile de pin brute (CTO) (24c) et en produits résiduels (24b),
le procédé comprenant en outre le transfert, sur un première séparateur centrifuge (« C1a ») inclus lors de la première étape de transformation (« A1 ») et à l'état chauffé, des faibles fractions de savon à l'huile de pin (10) reçues de cette manière, à l'état chauffé directement, ou par l'intermédiaire d'un réservoir tampon (« B »), vers ladite étape de transformation ultérieure (« A3 »), dans lequel le produit de savon à l'huile de pin concentré produit (10b1) est mélangé avec un acide (24a), à un stade chauffé, pour être fourni à un deuxième séparateur centrifuge (« C2 »), inclus lors de l'étape de transformation ultérieure (« A3 »), pour séparer lesdits produits d'huile de pin brute (24c) desdits produits résiduels (24b),
dans lequel le produit de savon à l'huile de pin concentré (10b1) transféré de cette manière est choisi pour avoir une température supérieure ou au moins proche de 95 °C, alors que l'acide (24a) à l'état chaud est choisi pour avoir une température supérieure ou d'au moins environ 95 °C,
dans lequel le premier séparateur centrifuge (« C1a ») est choisi avec une capacité de séparation supérieure pour former ledit produit de savon à l'huile de pin concentré (10b1) avec des petites fractions de produits résiduels mélangés avec ledit produit de savon à l'huile de pin concentré (10b1), et la liqueur noire séparée (20b1) ayant une faible fraction résiduelle adaptée de savon à l'huile de pin,
dans lequel le deuxième séparateur centrifuge (« C2 ») est choisi avec une capacité de séparation inférieure pour former lesdits produits d'huile de pin brute (24c) et lesdits produits résiduels (24b),
dans lequel le produit de savon à l'huile de pin concentré (10b1) est formé dans le premier séparateur centrifuge (« C1a ») et a une concentration supérieure à 80 pourcent en volume, et
dans lequel le séparateur centrifuge (« C1a ») a une sortie additionnelle (20b2) pour séparer la matière suspendue ayant une densité excédant la densité de la liqueur noire, ladite matière suspendue étant directement alimentée vers un bouilleur de récupération (14).

2. Procédé selon la revendication 1, dans lequel ladite première étape de transformation (« A1 ») est directement reliée à la deuxième étape de transformation (« A3 »).

3. Procédé selon la revendication 1 ou 2, dans lequel lesdits produits résiduels (24b) sont sous la forme d'eau acide, de lignine précipitée et de sels.

4. Procédé selon l'une quelconque des revendications précédentes, dans lequel le premier séparateur centrifuge (« C1a ») se compose de plusieurs séparateurs parallèles installés.

5. Procédé selon l'une quelconque des revendications précédentes, dans lequel le produit de savon à l'huile de pin concentré produit (10b1) est transféré au deuxième séparateur centrifuge (« C2 ») dans un laps de temps qui est inférieur à 10 heures.
